# EUROPÄISCHE PATENTSCHRIFT

(11) **EP 1 731 778 B1**
(45) Veröffentlichungstag und Bekanntmachung des Hinweises auf die Patenterteilung: **22.04.2009**
(21) Anmeldenummer: 06009906.6
(22) Anmeldetag: 13.05.2006
(51) Int. Cl.: F16C 35/04, F16C 35/067, F16C 35/06

(54) **Lageranordnung**
Bearing arrangement
Ensemble palier

(30) Priorität: 09.06.2005 DE 102005026499
(43) Veröffentlichungstag der Anmeldung: 13.12.2006
(73) Patentinhaber: AB SKF, 415 50 Göteborg (SE)
(72) Erfinder: Buchheim, Burkhard, 97422 Schweinfurt (DE); Dilje, Alexander, 97422 Schweinfurt (DE); Hauck, Helmut, 97502 Euerbach (DE); Stürzenberger, Jürgen, 97424 Schweinfurt (DE)
(74) Vertreter: Kohl, Thomas

(56) Entgegenhaltungen:
- DE-A1- 10 347 253
- DE-C1- 19 919 201
- DE-U1- 29 916 349
- US-A- 2 872 253
- US-A- 4 729 674

## Beschreibung

Die Erfindung betrifft eine Lageranordnung, bestehend aus einem Lagerträger und mindestens einem Lager, das von dem Lagerträger gehalten wird, wobei der Lagerträger mindestens eine kreisförmige Ausnehmung aufweist, die sich im montierten Zustand des Lagers um den Umfang mindestens eines Ringes des mindestens einen Lagers herum erstreckt.

Eine Lageranordnung dieser Art ist beispielsweise aus der DE 100 01 575 A1 bekannt, wo ein Lagerträger offenbart ist, der zwei Wälzlager trägt. Der Lagerträger ist als tiefgezogenes Bauteil ausgebildet und weist zwei napfförmige Vertiefungen für die Aufnahme des Wälzlagers auf. Damit die beiden Lager fest im Lagerträger angeordnet sind, wird nach dem Einsetzen der Lager in die vorgesehenen Vertiefungen durch Verstemmen etwas Material des Lagerträgers so umgeformt, dass ein Formschluss vorliegt, der die beiden Lager am Herausfallen bzw. am Heraustreten aus ihrer vorgesehenen Aufnahme hindert.

Lageranordnungen der eingangs genannten Art sind auch in der DE 103 47 253 A1, in der DE 299 16 349 U1, in der US 4 729 674 A, in der DE 199 19 201 C1 und in der US 2 872 253 A offenbart.

Das Herstellverfahren der vorbekannten Lageranordnungen stellt einen nicht unerheblichen fertigungstechnischen Aufwand dar, da die Lageraufnahme bei einigen vorbekannten Lösungen durch einen Tiefziehprozess erfolgen muss, durch den die napfförmigen Vertiefungen gebildet werden.

Ferner ergibt sich, dass hohe Betriebslasten der Lageranordnung in der Regel eine hohe Vorspannkraft des Systems erfordern, was nur durch eine Wärmebehandlung des Lagerträgers erreicht werden kann. In diesem Falle fällt jedoch das kostengünstige Verstemmen als Mittel zum Festlegen des Lagers im Lagerträger weg. Man muss in diesem Falle beispielsweise zu einer Lösung wechseln, bei der der Lagerträger in eine Trägernut im Lagerring eingeschnappt wird.

Aus der DE 200 19 278 U1 geht eine solche Lageranordnung hervor, bei der vorgesehen ist, dass der Lagerträger im wesentlichen eben ausgebildet ist und in eine Eindrehung im Außenring des Wälzlagers eingreift. Dabei weist der Lagerträger in einer Aufnahmebohrung für das Lager eine Anzahl radial nach innen vorstehende Vorsprünge auf, die in die Eindrehung im Lagerring eingreifen, wobei die Eindrehung im Schnitt eine unter Winkel axial nach innen abfallende Form aufweist, so dass bei eingeschnappten Vorsprüngen der Lagerträger mit axialem Hinterschnitt in die Lagerring-Eindrehung eingreift.

Damit kann in fertigungstechnisch einfacher Weise erreicht werden, dass die beiden Lager mit dem Lagerträger verbunden werden, wobei es möglich wird, dass in einer der Achsrichtungen hohe Lagerkräfte übertragen werden können.

Nachteilig bei solchen Lösungen ist es, dass in die andere Lagerachsrichtung keine nennenswerten Kräfte übertragen werden können. Bei zu hoher axialer Kraft in "Abziehrichtung" des Lagerträgers von der Eindrehung im Lagerring besteht die Gefahr, dass sich die Verbindung zwischen Lagerträger und Lager wieder löst, d. h. der Lagerträger wieder vom Lager abspringt. Dies ergibt sich durch den Umstand, dass die Überdeckung zwischen Eindrehung und Vorsprüngen nur minimal sein kann, um eine Montage (Aufschnappen) noch ermöglichen zu können.

Fertigungstechnische Probleme ergeben sich bei dieser Lösung auch durch folgenden Umstand: Der Lagerträger muss, wie erwähnt, für eine hinreichend hohe Festigkeit gehärtet sein, was allerdings zur Folge hat, dass der Lagerträger infolge Härteverzug relativ große Formtoleranzen aufweist. Daher ist es bei der genannten Lösung nachteilig, dass hohe Anforderungen an die Fertigung der zusammenwirkenden Teile Lagerträger und Wälzlager gestellt werden müssen. Namentlich muss die Aufnahmenut im Lagering in der Regel geschliffen werden, damit die relativ großen verzugsbedingten Toleranzen des Lagerträgers ausgeglichen werden können. Das Härten führt zu einer erheblichen Vergrößerung der Maß- und Formtoleranzen im Lagerträger, die entweder durch spanende Nacharbeit oder durch hochpräzise Eindrehungen im Lagerring ausgeglichen werden müssen.

Schwierigkeiten sind bei vorbekannten Lagerträgern auch dadurch bekannt geworden, dass es einen relativ hohen Aufwand darstellt, Lagerträger und Lager zu montieren. Teilweise ist es erforderlich, mit relativ aufwändigen Handhabungsvorrichtungen während der Montage dafür Sorge zu tragen, dass vormontierte Teile bis zum Abschluss der Montage in ihrer richtigen Position bleiben. Dies verteuert den Fertigungsprozess teilweise erheblich.

Der Erfindung liegt daher die **Aufgabe** zugrunde, eine Lageranordnung der eingangs genannten Art so weiterzubilden, dass sie sich durch eine kostengünstige Fertigungsmethode und insbesondere durch eine einfache Montage auszeichnet. Dabei soll die Lageranordnung auch in der Lage sein, in beiden Lagerachsrichtungen hohe Kräfte zu übertragen.

Die **Lösung** dieser Aufgabe durch die Erfindung ist dadurch gekennzeichnet, dass der Lagerträger mindestens zweiteilig ausgebildet ist, wobei ein Teil des Lagerträgers so geformt ist, dass sich die Ausnehmung zur Aufnahme eines Ringes des mindestens einen Lagers um mehr als 180° des Kreisumfangs erstreckt, wobei die mindestens zwei Teile des Lagerträgers durch Verschweißen oder Verlöten bleibend miteinander verbunden sind und wobei die mindestens zwei Teile des Lagerträgers im verbundenen Zustand eine weitgehend ungestörte ebene flächige Ausbildung aufweisen. Dabei erstreckt sich die Ausnehmung in dem einen Teil des Lagerträgers vorzugsweise über einen Winkelbereich zwischen 181° und 215°. Besonders bevorzugt ist vorgesehen, dass sich die Ausnehmung über einen Winkelbereich zwischen 185° und 195° erstreckt.

Der Erfindungsgedanke stellt also darauf ab, dass der Lagerträger mindestens zweiteilig ausgebildet wird, wobei allerdings keine symmetrische Teilung in Bezug auf die den Lagerring umfassenden Teile des Lagerträgers vorgesehen ist, sondern dass die Trennlinie zwischen den mindestens zwei Lagerträgerteilen so verläuft, dass sich in dem einen Lagerträgerteil eine Aufnahme für einen Lagerring ergibt, die sich etwas über den halben Umfang des Lagerrings erstreckt und so einen Hinterschnitt bildet. Der Hinterschnitt wird in vorteilhafter Weise dafür genutzt, das Lager bei der Montage mit dem Lagerträger in die sich ergebende Öffnung hineinzuschieben, wobei sich infolge der vorgesehenen Umfangserstreckung der Aufnahme im Lagerträgerteil ein Einschnappen des Lagers ergibt, wodurch ein unbeabsichtigtes Lösen zwischen Lagerträgerteil und Lager nicht erfolgen kann. Beim sich anschließenden Fügen (Anschweißen) des anderen Teils des Lagerträgers bzw. der restlichten Teile des Lagerträgers ist damit eine einfachere Handhabung möglich, was den Montageprozess vereinfacht und wirtschaftlicher gestaltet. Insbesondere muss keine Vorkehrung dafür getroffen werden, bei Anbringen des anderen Teils des Lagerträgers dafür Sorge zu tragen, dass das vorpositionierte Lager nicht mehr seine Position verlässt; dies ist nach dem Einschnappen des Lagers in das eine Lagerträgerteil nicht mehr möglich.

Es wird damit auch eine feste Verbindung zwischen dem Lager oder den Lagern und dem Lagerträger geschaffen, die in der Lage ist, in beiden Achsrichtungen hohe Kräfte zu übertragen. Der Einsatz gehärteten Materials als Teile des Lagerträgers macht keine Probleme. Gleichermaßen ist auch keine besonders hohe Fertigungstoleranz bei der Herstellung der benötigten Teile des Lagerträgers bzw. der Lager erforderlich, um trotzdem eine problemlose Montage sicherzustellen.

Bevorzugt ist vorgesehen, dass in einem der Ringe, insbesondere im Außenring, des mindestens einen Lagers in einer radial gerichteten Fläche eine Ringnut eingearbeitet ist, in die die Teile des Lagerträgers eingreifen. Dabei kann die Dicke des Lagerträgers zumindest im Bereich der Ausnehmung der Breite der Ringnut entsprechen.

Die Dicke des Lagerträgers kann auch geringfügig geringer als die Nutbreite ausgeführt sein, um die Montage einfach zu halten, d. h. es kann ein geringes Spiel zwischen Lagerträger und Nut, in Achsrichtung des Lagers gesehen, vorhanden sein.

Bevorzugt weist der gesamte Lagerträger eine im wesentlichen konstante Dicke aufweist.

Ferner sind bevorzugt zwei Lager nebeneinander so im Lagerträger angeordnet, dass ihre Achsen parallel zueinander verlaufen und sich die Lager im wesentlichen auf gleicher axialer Höhe befinden.

Die Lager sind mit Vorteil Wälzlager.

Für einen stabilen Verbund von Lagerträger und Lager bzw. Lagern ist eine bleibende Verbindung der beiden Teile des Lagerträgers vorgesehen. Mit Vorteil erfolgt die Verbindung der beiden Teile des Lagerträgers dabei durch Schweißen, wobei Elektroschweißen, Autogenschweißen, Schutzgasschweißen Laserschweißen oder Elektronenstrahlschweißen eingesetzt werden kann.

Alternativ hierzu kann auch Löten eingesetzt werden, wobei besonders an Hartlöten gedacht ist.

Der Lagerträger kann durch einen Umformprozess und/oder einen Stanzprozess gebildet, d. h. hergestellt werden, wobei der Prozess die Teilung eines Grundbauteils des Lagerträgers zur Schaffung zweier separater Teile des Lagerträgers beinhalten kann. Dabei kann das Teilen des zunächst noch einteiligen Lagerträgers in die beiden Teile durch Stanzen den letzten Vorgang der Produktion des Lagerträgers bilden.

Um den Lagerträger an einem weiteren Maschinenteil festzulegen, weist er bzw. seine Teile, vorzugsweise in seinem äußeren Bereich, in üblicher Weise eine Anzahl Befestigungselemente aufweist. Dabei kann es sich um Bohrungen zum Durchtritt einer Schraube oder um mit einem Gewinde versehene Bohrungen zum Zusammenwirken mit einer Schraube handeln. Der Lagerträger bzw. seine Teile können dabei, um eine höhere Festigkeit zu erreichen, im Bereich der Befestigungselemente eine vergrößerte Dicke aufweisen.

Mit Vorteil besteht der Lagerträger bzw. seine Teile aus gehärtetem Stahl.

Der Erfindungsvorschlag ermöglicht eine einfache Verbindung von Lagerträger und Lagern, wobei nach der Verbindung der beiden Teile des Lagerträgers sichergestellt ist, dass hohe Axiallasten in beide Lagerachsrichtungen übertragen werden können.

Die Lageranordnung eignet sich besonders dafür, zwei Lager in sehr enger Nachbarschaft anzuordnen, wie es bei Anwendungen im PKW-Getriebebau typisch ist. Grundsätzlich geeignet ist sie jedoch für alle Anwendungen, bei denen mindestens ein Lager mit einem Lagerträger in einfacher Weise verbunden ist und die Lageranordnung als Einheit eingesetzt wird.

In der Zeichnung sind Ausführungsbeispiele der Erfindung dargestellt. Es zeigen:
- Figur 1: die Draufsicht auf einen erfindungsgemäß ausgestalteten Lagerträger mit zwei Lagern,
- Figur 2: das eine Teil des Lagerträgers in der Draufsicht, vor der Montage der Lager,
- Figur 3: den Schnitt A-B gemäß Fig. 1 und
- Figur 4: das eine Teil des Lagerträgers in der Draufsicht, vor der Montage der Lager, gemäß einer alternativen Ausgestaltung der Erfindung.

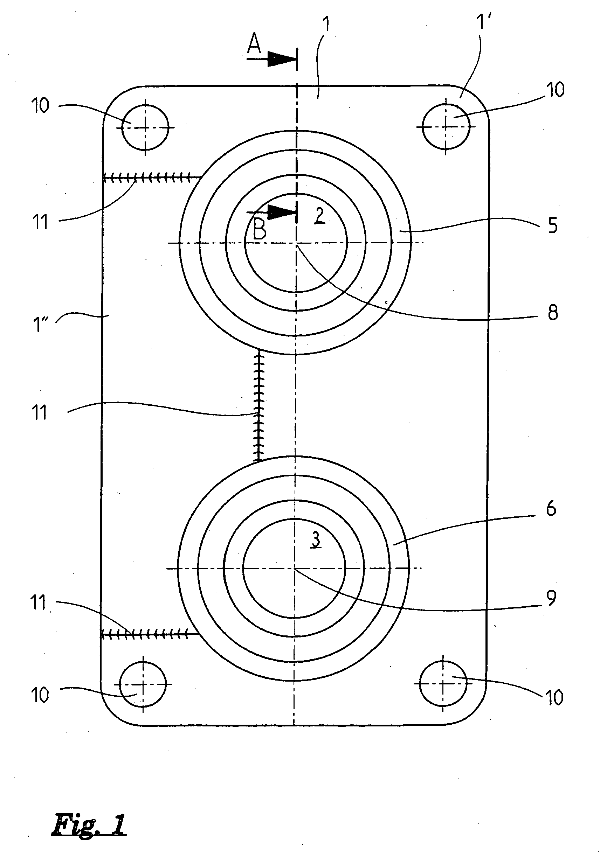

In Figur 1 ist ein Lagerträger 1 zu sehen, der gemäß einer Ausführungsform der Erfindung ausgebildet ist. Der Lagerträger 1 nimmt zwei Wälzlager 2 und 3 auf, wobei die beiden Lager 2, 3 so vom Lagerträger 1 gehalten werden, dass die beiden Achsen 8 und 9 der beiden Lager 2, 3 parallel zueinander angeordnet sind (in Fig. 1: senkrecht auf der Zeichenebene). Die Festlegung des Lagerträgers 1 an einem Maschinenteil, z. B. an dem Gehäuse eines PKW-Getriebes, erfolgt mit den Befestigungselementen 10. Es kann sich hierbei lediglich um Durchgangsbohrungen für Schrauben handeln. Möglich ist es aber auch, dass die Befestigungselemente 10 als Bohrungen ausgebildet sind, in die ein Gewinde für den Eingriff einer Schraube versehen sind.

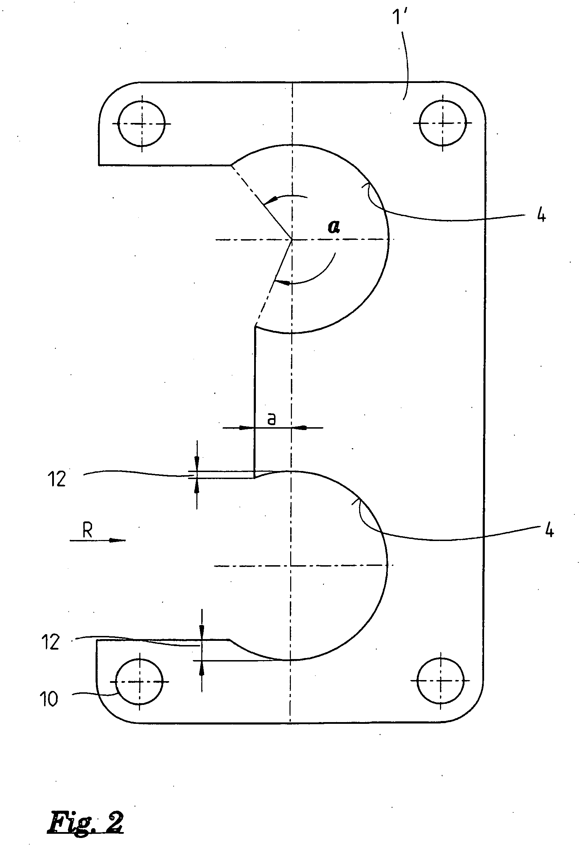

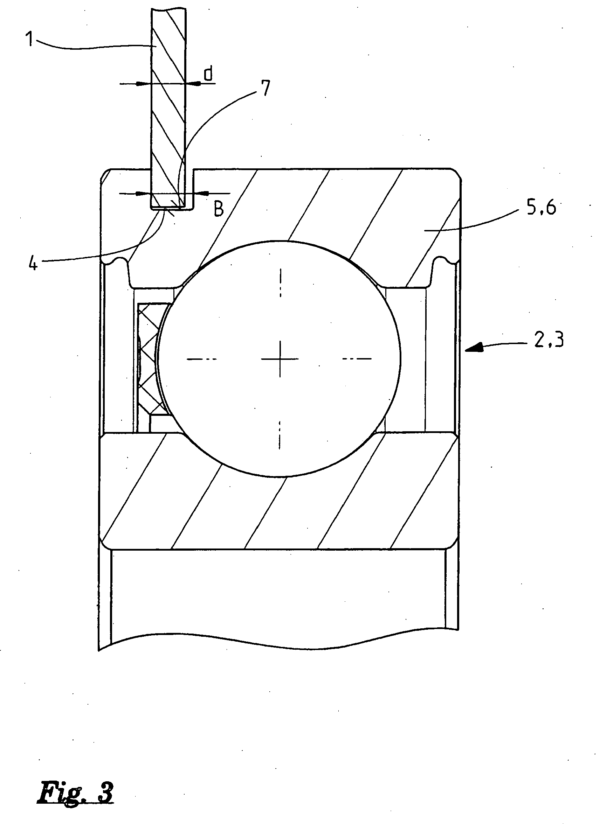

Wie die Außenringe 5, 6 der Lager 2, 3 vom Lagerträger 1 gehalten werden, ergibt sich aus den Figuren 2 und 3. Der Lagerträger 1 ist zweiteilig ausgebildet. Im Ausführungsbeispiel besteht der Lagerträger 1 aus den beiden Teilen 1' und 1", die zusammengesetzt ein weitgehend ungestört ausgebildetes ebenes Blech ergeben. Er weist - s. Figur 3 - eine weitgehend konstante Dicke d auf.

Die Außenringe 5, 6 der beiden Lager 2, 3 haben in ihrem Außenumfang eine Ringnut 7, und zwar im einen axialen Endbereich des Außenrings 5, 6. Die Breite B der Nut ist geringfügig größer als die Blechdicke d des Lagerträgers 1, so dass die Teile 1', 1" des Lagerträgers 1 leicht in die Ringnut 7 eingreifen können.

Hierzu weist der eine Teil 1' des Lagerträgers - wie es am besten aus Figur 2 zu sehen ist - eine Ausnehmung 4 auf, die eine kreisförmige Kontur hat und sich über einen Winkelbereich α erstreckt, der geringfügig größer als 180° ist. Bevorzugte Werte für den Winkelbereich α liegen zwischen 181° und 215°, besonders bevorzugt zwischen 185° und 195°.

Der Winkelbereich α ist so gewählt, dass sich für den Außenring 5, 6 eine solche Einschuböffnung in den Teil 1' des Lagerträgers 1 ergibt, dass der Ring 5, 6 bzw. die Ringnut 7 in die Ausnehmung 4 einschnappen kann. Wie in Figur 2 am Beispiel der unteren Ausnehmung 4 zu sehen ist, ergeben sich durch den Winkelbereich α von mehr als 180° - in eine seitliche Einschubrichtung R betrachtet - jeweilige Überstände oder Hinterschneidungen 12, so dass der Außenring 5, 6 in die Ausnehmung 4 einschnappen kann. Der sich dabei ergebende Versatz a (s. Figur 2) liegt bevorzugt im Bereich zwischen 5 bis 15 % des Radius der Ausnehmung 4.

In vorteilhafter Weise kann dann der Außenring 5, 6 nicht mehr in unbeabsichtigten Weise aus der Ausnehmung 4 herausrutschen, so dass keine Vorkehrungen getroffen werden müssen, mit denen ein solches Herausrutschen des Rings 5, 6 während der weiteren Montage verhindert werden müsste. Damit wird der Handhabungsaufwand bei der Montage des Lagerträgers erheblich reduziert.

Ist der Außenring 5, 6 und damit das Lager 2, 3 in die Ausnehmung 4 geschoben, wird das zweite Teil 1 " des Lagerträgers 1 angebracht. Es wird in die in Figur 1 skizzierte Position geschoben und dann festgeschweißt. In Figur 1 sind die Schweißnähte 11 angedeutet. Das zweite Teil 1" des Lagerträgers 1 weist ebenfalls eine kreisförmige Ausnehmung auf, die sich jedoch nicht ganz über 180° erstreckt; die Erstreckung der Ausnehmung im zweiten Teil 1" ergibt sich vielmehr als Differenz zwischen dem Winkelbereich α und 360°. Die beiden Teile 1' und 1" des Lagerträgers 1 stellen also komplementäre Teile dar, die zusammen die kreisförmige Ausbildung der Aufnahme für die Lagerringe 5, 6 bilden. Allerdings liegt keine symmetrische, also mittige, Teilung der beiden Teile 1', 1" vor.

Vielmehr ermöglicht die unsymmetrische Teilung der Teile 1', 1" das Einschnappen der Ringe 5, 6 aufgrund des sich ausbildenden Hinterschnitts 12, wodurch sich der erläuterte Montagehilfseffekt ergibt. Separate Handhabungsgeräte, die das im ersten Teil 1' des Lagerträgers 1 vormontierte Lager 2, 3 in Position hält, bis das zweite Teil 1" angebracht ist, sind also entbehrlich.

Durch die Ringnut 7 und den erläuterten Aufbau sind die Lager 2, 3 relativ zu dem Lagerträger 1 sowohl axial als auch radial festgelegt.

Nach dem Anschweißen des zweiten Teils 1" an das erste Teil 1' ist der Lagerträger fertig und kann zur Montage zu dem Maschinenelement verbracht werden, in das er eingebaut werden soll. Der Lagerträger 1 kann also nach der erläuterten Montage der Lager 2, 3 in bekannter Weise an einem weiteren Maschinenteil festgelegt werden, wofür die Befestigungselemente 10 vorgesehen sind. Es kann sich - wie erwähnt - bei diesen um Durchgangsbohrungen für den Durchtritt eines Schraubenschaftes oder um Gewindebohrungen handeln.

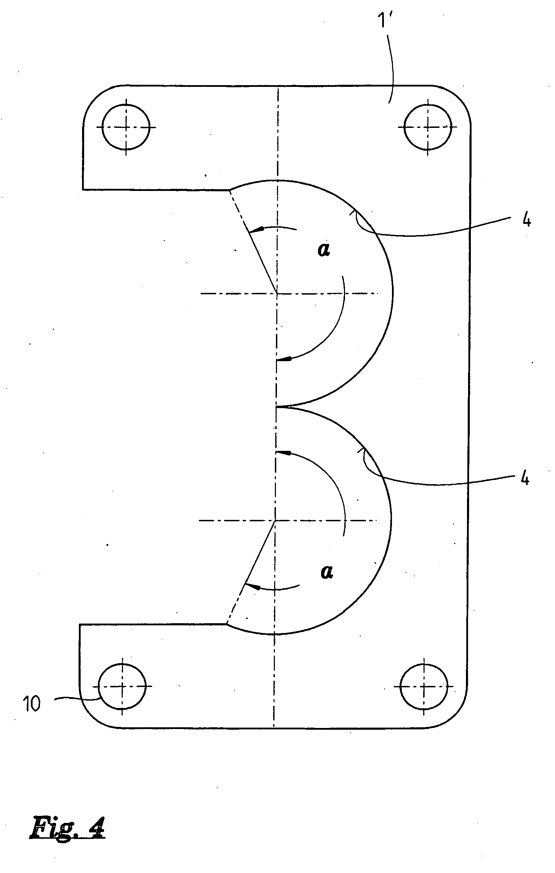

In Figur 4 ist illustriert, dass die beiden Ausnehmungen 4 für die beiden Lager 2, 3 bzw. Lagerringe 5, 6 auch unmittelbar aneinandergrenzend angeordnet werden können. Mit dieser Ausgestaltung werden die beiden Lager 2, 3 so eng wie möglich aneinander angeordnet. Wesentlich ist auch hier, dass sich die Ausnehmungen 4 um einen Winkelbereich □ von etwas mehr als 180° erstrecken, so dass die Lagerringe 5, 6 in die so geschaffenen Ausnehmungen einschnappen können.

### Bezugszeichenliste

- 1: Lagerträger
- 1': Teil des Lagerträgers
- 1": Teil des Lagerträgers
- 2: Lager (Wälzlager)
- 3: Lager (Wälzlager)
- 4: Ausnehmung
- 5: Lagerring
- 6: Lagerring
- 7: Ringnut
- 8: Achse des Lagers
- 9: Achse des Lagers
- 10: Befestigungselement
- 11: Schweißnaht
- 12: Hinterschneidung

- α: Winkelbereich
- d: Dicke des Lagerträgers
- B: Breite der Ringnut
- R: Einschubrichtung
- a: Versatz

## Patentansprüche

1. Lageranordnung, bestehend aus einem Lagerträger (1) und mindestens einem Lager (2, 3), das von dem Lagerträger (1) gehalten wird, wobei der Lagerträger (1) mindestens eine kreisförmige Ausnehmung (4) aufweist, die sich im montierten Zustand des Lagers (2, 3) um den Umfang mindestens eines Ringes (5, 6) des mindestens einen Lagers (2, 3) herum erstreckt, **dadurch gekennzeichnet, dass** der Lagerträger (1) mindestens zweiteilig (1', 1") ausgebildet ist, wobei ein Teil (1') des Lagerträgers (1) so geformt ist, dass sich die Ausnehmung (4) zur Aufnahme eines Ringes (5, 6) des mindestens einen Lagers (2,3) um mehr als 180° des Kreisumfangs erstreckt, wobei die mindestens zwei Teile (1', 1") des Lagerträgers (1) durch Verschweißen oder Verlöten bleibend miteinander verbunden sind und wobei die mindestens zwei Teile (1', 1") des Lagerträgers (1) im verbundenen Zustand eine weitgehend ungestörte ebene flächige Ausbildung aufweisen.

2. Lageranordnung nach Anspruch 1, **dadurch gekennzeichnet, dass** sich die Ausnehmung (4) in dem einen Teil (1') des Lagerträgers (1) über einen Winkelbereich (α) zwischen 181 und 215° erstreckt.

3. Lageranordnung nach Anspruch 2, **dadurch gekennzeichnet, dass** sich die Ausnehmung (4) in dem einen Teil (1') des Lagerträgers (1) über einen Winkelbereich (α) zwischen 185° und 195° erstreckt.

4. Lageranordnung nach einem der Ansprüche 1 bis 3, **dadurch gekennzeichnet, dass** in einem der Ringe (5, 6), insbesondere im Außenring, des mindestens einen Lagers (2, 3) in einer radial gerichteten Fläche eine Ringnut (7) eingearbeitet ist, in die die Teile (1', 1") des Lagerträgers (1) eingreifen.

5. Lageranordnung nach Anspruch 4, **dadurch gekennzeichnet, dass** die Dicke (d) des Lagerträgers (1) zumindest im Bereich der Ausnehmung (4) der Breite (B) der Ringnut (7) entspricht.

6. Lageranordnung nach Anspruch 5, **dadurch gekennzeichnet, dass** der gesamte Lagerträger (1) eine im wesentlichen konstante Dicke (d) aufweist.

7. Lageranordnung nach einem der Ansprüche 1 bis 6, **dadurch gekennzeichnet, dass** mindestens zwei Lager (2, 3) nebeneinander so im Lagerträger (1) angeordnet sind, dass ihre Achsen (8, 9) parallel zueinander verlaufen und sich die Lager (2, 3) im wesentlichen auf gleicher axialer Höhe befinden.

8. Lageranordnung nach einem der Ansprüche 1 bis 7, **dadurch gekennzeichnet, dass** das mindestens eine Lager (2, 3) ein Wälzlager ist.

9. Lageranordnung nach einem der Ansprüche 1 bis 8, **dadurch gekennzeichnet, dass** die Teile (1', 1") des Lagerträgers (1) mittels Elektroschweißen verbunden sind.

10. Lageranordnung nach einem der Ansprüche 1 bis 8, **dadurch gekennzeichnet, dass** die Teile (1', 1") des Lagerträgers (1) mittels Autogenschweißen verbunden sind.

11. Lageranordnung nach einem der Ansprüche 1 bis 8, **dadurch gekennzeichnet, dass** die Teile (1', 1") des Lagerträgers (1) mittels Schutzgasschweißen verbunden sind.

12. Lageranordnung nach einem der Ansprüche 1 bis 8, **dadurch gekennzeichnet, dass** die Teile (1', 1") des Lagerträgers (1) mittels Laserschweißen verbunden sind.

13. Lageranordnung nach einem der Ansprüche 1 bis 8, **dadurch gekennzeichnet, dass** die Teile (1', 1") des Lagerträgers (1) mittels Elektronenstrahlschweißen verbunden sind.

14. Lageranordnung nach einem der Ansprüche 1 bis 8, **dadurch gekennzeichnet, dass** die Teile (1', 1") des Lagerträgers (1) mittels Hartlöten verbunden sind.

15. Lageranordnung nach einem der Ansprüche 1 bis 14, **dadurch gekennzeichnet, dass** der Lagerträger (1) durch einen Umformprozess und/oder einen Stanzprozess hergestellt ist, wobei der Prozess die Teilung eines Grundbauteils des Lagerträgers (1) zur Schaffung zweier separater Teile (1', 1") des Lagerträgers (1) beinhaltet.

16. Lageranordnung nach einem der Ansprüche 1 bis 15, **dadurch gekennzeichnet, dass** der Lagerträger (1) bzw. seine Teile (1', 1"), vorzugsweise in seinem äußeren Bereich, eine Anzahl Befestigungselemente (10) aufweist.

17. Lageranordnung nach Anspruch 16, **dadurch gekennzeichnet, dass** die Befestigungselemente (10) Bohrungen zum Durchtritt einer Schraube sind.

18. Lageranordnung nach Anspruch 16, **dadurch gekennzeichnet, dass** die Befestigungselemente (10) mit einem Gewinde versehene Bohrungen zum Zusammenwirken mit einer Schraube sind.

19. Lageranordnung nach einem der Ansprüche 16 bis 18, **dadurch gekennzeichnet, dass** der Lagerträger (1) bzw. seine Teile (1', 1") im Bereich der Befestigungselemente (10) eine vergrößerte Dicke aufweist.

20. Lageranordnung nach einem der Ansprüche 1 bis 19, **dadurch gekennzeichnet, dass** der Lagerträger (1) bzw. seine Teile (1', 1") aus gehärtetem Stahl besteht bzw. bestehen.

## Claims

1. Bearing arrangement, composed of a bearing carrier (1) and at least one bearing (2, 3) which is held by the bearing carrier (1), with the bearing carrier (1) having at least one circular recess (4) which, in the mounted state of the bearing (2, 3), extends around the periphery of at least one ring (5, 6) of the at least one bearing (2, 3), **characterized in that** the bearing carrier (1) is formed at least in two parts (1', 1"), with one part (1') of the bearing carrier (1) being formed such that the recess (4) for holding a ring (5, 6) of the at least one bearing (2, 3) extends around more than 180° of the circular periphery, with the at least two parts (1', 1") of the bearing carrier (1) being permanently connected to one another by welding or soldering and with the at least two parts (1', 1") of the bearing carrier (1) having a substantially uninterrupted planar areal design in the connected state.

2. Bearing arrangement according to Claim 1, **characterized in that** the recess (4) in the one part (1') of the bearing carrier (1) extends over an angular range (α) of between 181° and 215°.

3. Bearing arrangement according to Claim 2, **characterized in that** the recess (4) in the one part (1') of the bearing carrier (1) extends over an angular range (α) of between 185° and 195°.

4. Bearing arrangement according to one of Claims 1 to 3, **characterized in that** an annular groove (7) is formed in a radially directed surface in one of the rings (5, 6), in particular in the outer ring, of the at least one bearing (2, 3), into which annular groove (7) the parts (1', 1") of the bearing carrier (1) engage.

5. Bearing arrangement according to Claim 4, **characterized in that** the thickness (d) of the bearing carrier (1) corresponds, at least in the region of the recess (4), to the width (B) of the annular groove (7).

6. Bearing arrangement according to Claim 5, **characterized in that** the entire bearing carrier (1) has a substantially constant thickness (d).

7. Bearing arrangement according to one of Claims 1 to 6, **characterized in that** at least two bearings (2, 3) are arranged adjacent to one another in the bearing carrier (1) in such a way that the axes (8, 9) of said bearings (2, 3) run parallel to one another and the bearings (2, 3) are situated at substantially the same axial height.

8. Bearing arrangement according to one of Claims 1 to 7, **characterized in that** the at least one bearing (2, 3) is a rolling bearing.

9. Bearing arrangement according to one of Claims 1 to 8, **characterized in that** the parts (1', 1") of the bearing carrier (1) are connected by means of electric welding.

10. Bearing arrangement according to one of Claims 1 to 8, **characterized in that** the parts (1', 1") of the bearing carrier (1) are connected by means of autogenous welding.

11. Bearing arrangement according to one of Claims 1 to 8, **characterized in that** the parts (1', 1") of the bearing carrier (1) are connected by means of gas-shielded welding.

12. Bearing arrangement according to one of Claims 1 to 8, **characterized in that** the parts (1', 1") of the bearing carrier (1) are connected by means of laser welding.

13. Bearing arrangement according to one of Claims 1 to 8, **characterized in that** the parts (1', 1") of the bearing carrier (1) are connected by means of electron beam welding.

14. Bearing arrangement according to one of Claims 1 to 8, **characterized in that** the parts (1', 1") of the bearing carrier (1) are connected by means of hard soldering.

15. Bearing arrangement according to one of Claims 1 to 14, **characterized in that** the bearing carrier (1) is produced by means of a shaping process and/or a punching process, with the process comprising the splitting of a basic component of the bearing carrier (1) in order to create two separate parts (1', 1") of the bearing carrier (1).

16. Bearing arrangement according to one of Claims 1 to 15, **characterized in that** the bearing carrier (1) or its parts (1', 1") has, preferably in its outer region, a number of fastening elements (10).

17. Bearing arrangement according to Claim 16, **characterized in that** the fastening elements (10) are bores for the passage of a screw.

18. Bearing arrangement according to Claim 16, **characterized in that** the fastening elements (10) are bores provided with a thread for interacting with a screw.

19. Bearing arrangement according to one of Claims 16 to 18, **characterized in that** the bearing carrier (1) or its parts (1', 1 ") has an increased thickness in the region of the fastening elements (10).

20. Bearing arrangement according to one of Claims 1 to 19, **characterized in that** the bearing carrier (1) or its parts (1', 1") is or are composed of hardened steel.

## Revendications

1. Dispositif de palier, composé d'un support de palier (1) et d'au moins un palier (2, 3), qui est porté par le support de palier (1), dans lequel le support de palier (1) présente au moins un évidement circulaire (4) qui, lorsque le palier (2, 3) se trouve à l'état monté, s'étend autour de la périphérie d'au moins une bague (5, 6) de l'au moins un palier (2, 3), **caractérisé en ce que** le support de palier (1) est réalisé en au moins deux parties (1', 1"), dans lequel une partie (1') du support de palier (1) est formée de telle manière que l'évidement (4) s'étende sur plus de 180° de la périphérie circulaire pour recevoir une bague (5, 6) de l'au moins un palier (2, 3), dans lequel les au moins deux parties (1', 1") du support de palier (1) sont assemblées l'une à l'autre de manière permanente par soudage ou brasage et dans lequel les au moins deux parties (1', 1") du support de palier (1) présentent, à l'état assemblé, une configuration plate plane largement non perturbée.

2. Dispositif de palier selon la revendication 1, **caractérisé en ce que** l'évidement (4) s'étend sur une zone angulaire (α) comprise entre 181° et 215° dans la première partie (1') du support de palier (1).

3. Dispositif de palier selon la revendication 2, **caractérisé en ce que** l'évidement (4) s'étend sur une zone angulaire (α) comprise entre 185° et 195° dans la première partie (1') du support de palier (1).

4. Dispositif de palier selon l'une quelconque des revendications 1 à 3, **caractérisé en ce qu'**une rainure annulaire (7), dans laquelle s'engagent les parties (1', 1") du support de palier (1), est usinée dans une face orientée radialement d'une des bagues (5, 6), en particulier dans la bague extérieure, de l'au moins un palier (2, 3).

5. Dispositif de palier selon la revendication 4, **caractérisé en ce que** l'épaisseur (d) du support de palier (1) correspond à la largeur (B) de la rainure annulaire (7), au moins dans la région de l'évidement (4).

6. Dispositif de palier selon la revendication 5, **caractérisé en ce que** le support de palier (1) tout entier présente une épaisseur (d) essentiellement constante.

7. Dispositif de palier selon l'une quelconque des revendications 1 à 6, **caractérisé en ce qu'**au moins deux paliers (2, 3) sont disposés l'un à côté de l'autre dans le support de palier (1) de telle manière que leurs axes (8, 9) soient parallèles l'un à l'autre et que les paliers (2, 3) se trouvent essentiellement à la même hauteur axiale.

8. Dispositif de palier selon l'une quelconque des revendications 1 à 7, **caractérisé en ce que** l'au moins un palier (2, 3) est un palier à roulement.

9. Dispositif de palier selon l'une quelconque des revendications 1 à 8, **caractérisé en ce que** les parties (1', 1") du support de palier (1) sont assemblées par soudage électrique.

10. Dispositif de palier selon l'une quelconque des revendications 1 à 8, **caractérisé en ce que** les parties (1', 1 ") du support de palier (1) sont assemblées par soudage autogène.

11. Dispositif de palier selon l'une quelconque des revendications 1 à 8, **caractérisé en ce que** les parties (1', 1") du support de palier (1) sont assemblées par soudage sous gaz protecteur.

12. Dispositif de palier selon l'une quelconque des revendications 1 à 8, **caractérisé en ce que** les parties (1', 1") du support de palier (1) sont assemblées par soudage au laser.

13. Dispositif de palier selon l'une quelconque des revendications 1 à 8, **caractérisé en ce que** les parties (1', 1") du support de palier (1) sont assemblées par soudage au faisceau d'électrons.

14. Dispositif de palier selon l'une quelconque des revendications 1 à 8, **caractérisé en ce que** les parties (1', 1 ") du support de palier (1) sont assemblées par brasage dur.

15. Dispositif de palier selon l'une quelconque des revendications 1 à 14, **caractérisé en ce que** le support de palier (1) est fabriqué par un processus de déformation et/ou un processus d'estampage, le processus comportant une division d'un composant de base du support de palier (1) pour procurer les deux parties séparées (1', 1") du support de palier (1).

16. Dispositif de palier selon l'une quelconque des revendications 1 à 15, **caractérisé en ce que** le support de palier (1) ou ses parties (1', 1") présente(nt) plusieurs éléments de fixation (10) de préférence dans sa/leur région extérieure.

17. Dispositif de palier selon la revendication 16, **caractérisé en ce que** les éléments de fixation (10) sont des alésages pour le passage d'une vis.

18. Dispositif de palier selon la revendication 16, **caractérisé en ce que** les éléments de fixation (10) sont des alésages pourvus d'un filet pour coopérer avec une vis.

19. Dispositif de palier selon l'une quelconque des revendications 16 à 18, **caractérisé en ce que** le support de palier (1) ou ses parties (1', 1") présente / présentent une épaisseur accrue dans la région des éléments de fixation (10).

20. Dispositif de palier selon l'une quelconque des revendications 1 à 19, **caractérisé en ce que** le support de palier (1) ou ses parties (1', 1") est constitué / sont constituées d'acier trempé.
